# EUROPÄISCHE PATENTANMELDUNG

(11) **EP 1 532 905 A1**
(43) Veröffentlichungstag der Anmeldung: **25.05.2005**
(21) Anmeldenummer: 03405827.1
(22) Anmeldetag: 20.11.2003
(51) Int. Cl.: A47J 31/54

(54) **VORRICHTUNG ZUR VERSORGUNG EINER KAFFEEMASCHINE ODER DERGLEICHEN MIT HEISSWASSER, DAMPF ODER HEISSMILCH**

(71) Anmelder: Steiner AG Weggis, 6353 Weggis (CH)
(72) Erfinder: Grenon, Vincent, 1908 Riddes (CH)
(74) Vertreter: Luchs, Willi

(57) **Zusammenfassung**

Bei einer Vorrichtung zur Versorgung einer Kaffeemaschine oder dergleichen mit Heisswasser, Dampf oder Heissmilch ist ein als eine stabförmige Heizpatrone (21) ausgebildetes Heizelement vorgesehen. Diese Heizpatrone (21) ist von einer Hülseneinheit ummantelt, in der eine das Wasser oder die Milch durchlassenden Leitung (20) gebildet ist. Die Hülseneinheit setzt sich vorteilhaft aus einer inneren sowie einer äusseren langgestreckten Hülse (10, 12) zusammen, von denen mindestens eine mit einer wendel- bzw. schraubenförmigen, der anderen Hülse zugewandten äusseren bzw. inneren Umfangsnut (15) für die Bildung der Leitung (20) versehen ist. Damit wird eine sehr kompakte und einfache Bauweise der Vorrichtung ermöglicht.

## Beschreibung

Die Erfindung betrifft eine Vorrichtung zur Versorgung einer Kaffeemaschine oder dergleichen mit Heisswasser, Dampf oder Heissmilch gemäss dem Oberbegriff des Anspruches 1.

Es sind Vorrichtungen dieser Art bekannt, die einen aufheizbaren Wasserbehälter (Boiler) aufweisen, in dessen Innenraum das Wasser über einen Eingangsanschluss gepumpt und dort beispielsweise mittels eines spiralförmigen Widerstand-Heizelementes erhitzt wird. Nach der Erhitzung wird dann das Heisswasser oder der Dampf über einen Ausgangsanschluss entweder zu einer Extraktionsvorrichtung der Kaffeemaschine gefördert, oder das Heisswasser gelangt direkt zu einem Auslass zur Entnahme für Tee oder dergleichen. Eine derartige Vorrichtung ist beispielsweise in der EP-0 761 150 offenbart. Der Wasserbehälter ist relativ kostspielig und nimmt auch relativ viel Platz in Anspruch.

Der vorliegenden Erfindung liegt die Aufgabe zugrunde, eine köstengünstigere und kompaktere Vorrichtung der eingangs genannten Art zu schaffen.

Diese Aufgabe wird erfindungsgemäss durch eine Vorrichtung mit den Merkmalen des Anspruches 1 gelöst.

Weitere bevorzugte Ausgestaltungen der erfindungsgemässen Vorrichtung bilden den Gegenstand der abhängigen Ansprüche.

Dadurch, dass das Heizelement als eine stabförmige Heizpatrone ausgebildet ist, auf welche eine innere sowie eine äussere, langgestreckte Hülse konzentrisch aufgesetzt sind, von denen mindestens eine mit einer schraubenförmigen, der anderen Hülse zugewandten äusseren bzw. inneren Umfangsnut versehen ist, wobei die beiden Hülsen zusammen einen wendelförmigen Raum zur Aufheizung von Wasser (oder auch Milch) umschliessen, wird eine sehr kompakte und einfache Bauweise der Vorrichtung ermöglicht. Die auf dem Markt erhältlichen Hochleistungs-Heizpatronen sind nicht nur kostengünstig und platzsparend, sondern auch sehr effizient, so dass die Zeit zum Aufheizen sehr kurz ist, und die Vorrichtung praktisch einen kontinuierlichen Betrieb erlaubt. Zudem entfällt das beim Boiler notwendige Niveaumessen.

Die Erfindung wird nachfolgend anhand der Zeichnung näher erläutert. Es zeigen:
- Fig. 1: ein Ausführungsbeispiel der erfindungsgemässen Vorrichtung zur Versorgung einer Kaffeemaschine mit Heisswasser, Dampf oder Heissmilch in perspektivischer Darstellung; und
- Fig. 2: die Vorrichtung nach Fig. 1 im Längsschnitt.

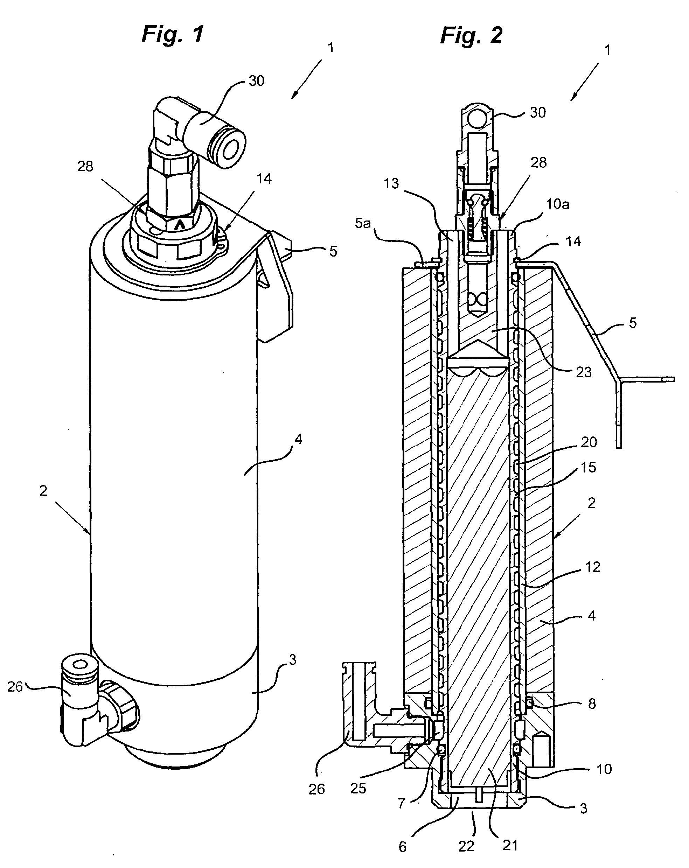

Gemäss Fig. 1 und 2 weist eine Vorrichtung 1 zur Versorgung einer Kaffeemaschine mit Heisswasser, Dampf oder Heissmilch ein aus einem unteren Sockel 3 und einem langgestreckten Isolationsrohr 4 bestehendes Gehäuse 2 auf, welches mit einem Träger 5 in der Kaffeemaschine oder in einem entsprechenden Modul derselben eingebaut und festgehalten wird.

Der Sockel 3 weist eine zentrale Öffnung 6 auf (Fig. 2). In die zentrale Öffnung 6 ist eine innere Hülse 10 eingesetzt, die unten auf einem ersten Absatz 7 der Öffnung 6 axial abgestützt ist. Auf einem etwas höher liegenden zweiten Absatz 8 der Öffnung 6 ist eine weitere, zur inneren Hülse 10 konzentrische äussere Hülse 12 axial abgestützt. Die innere Hülse 10 ragt mit ihrem oberen Endteil 10a aus dem Isolationsrohr 4 hinaus. Mittels eines in eine Umfangsnut 13 des Endteils 10a eingesetzten Sicherungsringes 14 wird der auf den Endteil 10a mit einer Öffnung 5a aufgesetzte Träger 5 gegenüber dem Isolationsrohr 4 und über den Träger 5 auch die äussere sowie auch die innere Hülse 12, 10 axial festgehalten.

Am Aussenumfang der inneren Hülse 10 ist eine schraubenförmige Umfangsnut 15 angefertigt, die sich über den ganzen, den beiden langgestreckten Hülsen 10, 12 gemeinsamen Längsbereich erstreckt. Auf diese Art und Weise wird ein wendelförmiger Raum 20 zwischen den beiden Hülsen 10, 12 gebildet, der zur Aufheizung von Wasser oder Milch vorgesehen ist. In die innere, aus einem wärmeleitfähigen Material (z.B. Messing) angefertigte Hülse 10 ist ein Heizelement in Form von einer stabförmigen Heizpatrone 21 eingesetzt und zwischen einem unteren Sockelverschluss 22 und einem im oberen Bereich der inneren Hülse 10 eingesetzten Verbindungsstück 23 gehalten.

Bei der Heizpatrone 21 handelt es sich um eine auf dem Markt erhältliche Hochleistungs-Heizpatrone, die extrem hohe Leistung bringen kann und dabei den kleinsten Raum beansprucht. Die äussere Hülse 12 ist beispielsweise aus Inox angefertigt.

Der wendelförmige Raum 20 ist einerseits unten über einen Ringraum 25 zwischen der inneren Hülse 10 und dem Sockel 3 an einen Eingangsanschluss 26 angeschlossen und anderseits über das mit entsprechenden Leitungen versehene Verbindungsstück 23 und ein Rückschlagventil 28 mit einem Ausgangsanschluss 30 verbunden. Der Raum 20 zur Aufheizung von Wasser oder Milch ist über sowohl im unteren als auch im oberen Bereich angeordnete Dichtungen 31, 32 bzw. 33 abgedichtet.

Das zu erhitzende Wasser oder die Milch wird mittels einer aus der Zeichnung nicht ersichtlichen Pumpe über den Eingangsanschluss 26 in den wendelförmigen Raum 20 gepumpt und beim Durchlauf durch den von der Heizpatrone 21 erhitzten Raum 20 auf entsprechende Temperatur aufgeheizt. Beispielsweise bei etwa 20 Windungen und einem Durchmesser von etwa 40 mm kann sich eine Gesamtstrecke von 2 bis 3 m für das Aufheizen ergeben. Die Temperatur kann durch einen in der Heizpatrone 21 integrierten bzw. noch durch einen weiteren, beim Ausgang angebrachten Temperatur-Sensor (nicht dargestellt) gemessen werden. Die Dampferzeugung kann unter einem Druck von 1 bis 2 bar erfolgen, wobei vorteilhafterweise ein sehr trockener Dampf erzeugt werden kann. Es können je nach Bedarf verschieden Druck- bzw. Rückschlagventile 28 beim Ausgangsanschluss 30 eingesetzt werden.

Wie bereits erwähnt, kann die notwendige Temperatur von 75°C bis 150°C mit einer im Durchmesser schmalen Heizpatrone 21 erreicht werden, so dass die gesamte Vorrichtung 1 sehr kompakt und platzsparend ist (der Aussendurchmesser kann z.B. etwa 45 mm betragen. Ein weiterer wesentlicher Vorteil besteht darin, dass der Raum 20 mit dem aufzuheizenden Medium sehr rasch erwärmt werden kann (es dauert etwa 15 s bis eine kalte Heizpatrone erhitzt wird). Dies bedeutet, dass die Kaffeemaschine praktisch kontinuierlich mit Heisswasser, Dampf oder Heissmilch versorgt werden kann.

Es wären auch andere Ausführungsformen der erfindungsgemässen Vorrichtung durchaus denkbar. So könnte die Umfangsnut zur Bildung des wendelförmigen Raumes am Innenumfang der äusseren Hülse angefertigt sein, wobei dann mit Vorteil auch diese Hülse aus einem wärmeleitfähigen Material bestehen sollte. Allerdings könnten auch beide Hülsen mit einer schraubenförmigen Umfangsnut versehen sein. Statt zwei einstückigen Hülsen zur Begrenzung des Raumes zum Aufheizen des Wassers oder der Milch könnten auch mehrere aneinander anschliessende Hülsen oder im Prinzip auch nur eine beispielsweise gegossene Hülse vorgesehen sein.

Der Eingangsanschluss 26 kann auch an eine Wasser- bzw. Milchquelle angeschlossen sein und nach dem Ausgangsanschluss 30 kann ein entsprechendes Ansaugmittel vorgesehen sein.

Die innere Hülse 10 kann ausser Messing auch aus Kupfer mit einer Beschichtung, wie Teflon oder Nickel oder ähnlichem bestehen.

## Patentansprüche

1. Vorrichtung zur Versorgung einer Kaffeemaschine oder dergleichen mit Heisswasser, Dampf oder Heissmilch, welche mittels eines Heizelementes aufheizbar ist, das von einer das Wasser oder Milch durchlassenden Leitung (20) umgeben ist, **dadurch gekennzeichnet, dass**
das Heizelement als eine stabförmige Heizpatrone (21) ausgebildet ist, welche von einer die Leitung (20) wendelförmig bildenden Hülseneinheit ummantelt ist.

2. Vorrichtung nach Anspruch 1, **dadurch gekennzeichnet, dass** die Hülseneinheit durch eine innere sowie eine äussere, langgestreckte Hülse (10, 12) gebildet ist, von denen mindestens eine mit einer wendel- bzw. schraubenförmigen, der anderen Hülse zugewandten äusseren bzw. inneren Umfangsnut (15) versehen ist, wobei die beiden Hülsen (10, 12) zusammen die wendelförmige, das Wasser bzw. die Milch durchlassende Leitung (20) bilden.

3. Vorrichtung nach Anspruch 1 oder 2, **dadurch gekennzeichnet, dass** eine Pumpe oder ein Wasseranschluss für einen Durchlauf des Wassers oder der Milch bei einem Eingangsanschluss (26) durch die wendelförmige Leitung (20) sowie ein einem Ausgangsanschluss (30) zugeordnetes Rückschlagventil (28) vorgesehen sind.

4. Vorrichtung nach Anspruch 2, **dadurch gekennzeichnet, dass** die schraubenförmige Umfangsnut (15) am Aussenumfang der inneren Hülse (10) angefertigt ist.

5. Vorrichtung nach Anspruch 2, **dadurch gekennzeichnet, dass** die innere Hülse (10) aus Messing, Kupfer mit einer Beschichtung, wie Teflon oder Nickel und die äussere Hülse (12) aus Inox besteht.

6. Vorrichtung nach Anspruch 1, **dadurch gekennzeichnet, dass** der Eingangsanschluss (26) an eine Wasser- bzw. Milchquelle angeschlossen ist und nach dem Ausgangsanschluss (30) entsprechende Ansaugmittel vorgesehen sind.
